# EUROPÄISCHE PATENTSCHRIFT

(11) **EP 3 440 029 B1**
(45) Veröffentlichungstag und Bekanntmachung des Hinweises auf die Patenterteilung: **07.05.2025**
(21) Anmeldenummer: 17714734.5
(22) Anmeldetag: 30.03.2017
(51) Int. Cl.: C04B 24/02, C04B 24/32, C04B 40/00

(54) **SCHÄUMUNGSMITTEL UND VERFAHREN FÜR DAS SCHÄUMEN UND STABILISIEREN VON SCHÄUMEN FÜR LUFTPORENHALTIGE BAUMATERIALIEN**
FOAMING AGENT AND METHOD FOR FOAMING AND STABILIZING FOAMS FOR CONSTRUCTION MATERIALS CONTAINING AIR PORES
AGENT MOUSSANT ET PROCÉDÉ POUR LE MOUSSAGE ET LA STABILISATION DE MOUSSES POUR DES MATÉRIAUX DE CONSTRUCTION CONTENANT DES PORES D'AIR

(30) Priorität: 05.04.2016 DE 102016106196
(43) Veröffentlichungstag der Anmeldung: 13.02.2019
(73) Patentinhaber: ML7 Entwicklungs GmbH, 14057 Berlin (DE)
(72) Erfinder: LÜBNITZ, Michael, 14193 Berlin (DE)
(74) Vertreter: Stork Bamberger Patentanwälte PartmbB
(86) Internationale Anmeldenummer: PCT/EP2017/057587
(87) Internationale Veröffentlichungsnummer: WO 2017/174441

(56) Entgegenhaltungen:
- EP-A1- 0 204 370
- EP-A1- 3 127 886
- EP-A2- 0 286 149
- CA-C- 1 323 882
- DE-A1- 2 056 255
- US-A- 6 046 247
- US-A1- 2006 278 128
- US-A1- 2009 169 864
- US-A1- 2016 060 168

## Beschreibung

Die Erfindung betrifft ein Schäumungsmittel für das Schäumen eines Bindemittelleims oder einer Baustoffmaische zur Herstellung luftporenhaltigen Baumaterials, die Verwendung dieses Schäumungsmittels zur Stabilisierung eines Schaums für luftporenhaltiges Baumaterial, Verfahren zur Herstellung eines luftporenhaltigen Baumaterials sowie nach den Verfahren erhältliche luftporenhaltige Baumaterialien und Bauprodukte.

Die Festigkeit hydraulisch abbindender Baustoffe wird durch Art, Menge und Qualität der eingesetzten Bindemittel bereitgestellt und durch Additive und Zuschläge verstärkt oder wie gewünscht eingestellt. Aus Bindemittel und Wasser wird ein Bindemittelleim hergestellt. Bestandteile des Bindemittels reagieren mit dem Wasser und binden dabei ab. Teilweise ergibt dies direkt den Baustoff, z.B. bei Füllgips und bestimmten Kalkputzen. Der Bindemittelleim bildet in diesem Fall direkt die Baustoffmaische. In anderen Fällen werden dem Bindemittelleim noch ein Zuschlag, meist Kies, Sand, Aschen, Fasern oder Schlacken und/oder Additive in Form baustoffchemischer Zusätze wie Fließmittel, Beschleuniger oder Verzögerer zugegeben, um dem Bindemittelleim die gewünschten Eigenschaften zu verleihen. Der wasserhaltige Bindemittelleim mit Zuschlag und Additiven wird im Folgenden als Baustoffmaische bezeichnet. Diese viskose Maische bindet zu dem fertigen Bauprodukt ab.

Bei Bauprodukten im Sinne dieser Beschreibung kann es sich um Gips, Beton, Kalk oder Mischformen hiervon handeln. Die Bindemittel umfassen gelöschten Kalk, Gips als Natur- und REA-Gips und verschiedenste Zementarten, bevorzugt Portlandzement oder Tonerdeschmelzzemente. Die Bezeichnung der Bindemittel Gips, Kalk und Zement umfasst üblicherweise auch solche Bindemittel, die in untergeordneter Menge ein anderes Bindemittel oder weitere zusätzliche pulverförmige mineralische Bestandteile, z.B. anorganische Oxide (Mg, Si, Fe) umfassen.

Die Rheologie und das Abbindeverhalten von Baustoffmaischen sind insbesondere für Beton und Gips zwar vielfältig untersucht, aber aufgrund der zahlreichen Kombinationsmöglichkeiten von sehr vielen Faktoren abhängig und deshalb nicht abschließend betrachtet. Die Anzahl der Kombinationen mit Zuschlägen und Additiven erschwert abschließende Untersuchungen. Zudem besteht häufig eine beträchtliche Abhängigkeit von Verarbeitungstemperatur und -druck. Außerdem sind Baustoffe Naturstoffe, die natürlichen Schwankungen unterliegen, weshalb selbst bei identischen Mischungen Variationen der Ergebnisse möglich sind.

Leichtere und besser wärme- und kälteisolierende Baustoffe sind seit langem als sogenannte Leicht- oder Porenbaustoffe bekannt, die aufgrund von Lufteinschlüssen oder Beigabe leichter Zuschläge wie Perliten, Blähton, Bims oder Zellulose, von geringerer Dichte sind. Nachteilig im Vergleich zu Lufteinschlüssen ist der häufig hohe Preis der Zuschläge, deren beschränkte Verfügbarkeit und ihr oft negativer Effekt auf die Isolier- oder Schalleigenschaften des Baustoffs.

Aus der EP 0 568 752 A1 ist ein Leichtgips bekannt, der hergestellt wird, indem einem Gipsbaumaterial ein mineralisches, poröses Füllmaterial und vorzugsweise ein Perlit zugesetzt wird. Durch die Poren des Füllmaterials ergibt sich ein Baumaterial mit gegenüber massivem Gips niedrigerer, einstellbarer Dichte.

Gipse werden industriell vielfältig verwendet, unter anderem als Bau- und Modelliermaterialien, als Dämmstoffe, als Abformmassen und für medizinische Zwecke. Gipse besitzen häufig erwünschte Verarbeitungseigenschaften wie gute Formbarkeit und Modellierbarkeit vor dem Abbinden und gute Nachbearbeitbarkeit und Schleifbarkeit nach dem Abbinden. Sie bieten für viele Zwecke das gewünschte Maß an Festigkeit, sind relativ kostengünstig und gut verfügbar. Chemisch handelt es sich um Kalziumsulfate, die in verschiedenen Modifikationen sowohl natürlich vorkommen wie auch synthetisch hergestellt werden können. Das Dihydrat (CaSO₄·2H₂O) gibt beim Erhitzen Kristallwasser ab und geht dabei zunächst in ein Hemihydrat und später in ein Anhydrit über. Die wenigstens teilweise dehydratisierten Gipsformen können Wasser wieder aufnehmen und dabei rekristallisieren. Nicht vollständig hydratisierter Gips kann daher unter Wasseraufnahme abbinden.

Heutige Anforderungen im Bauwesen erfordern von Baumaterialien geringes Gewicht (geringe Transportkosten, einfache Verarbeitung), gute Wärme- und Kälteisolierwerte (Energieeinsparung), sowie verbesserte Schallisolierung (Wohnkomfort, Gesundheit). Grundlage hierfür sind leichte Baustoffe aus denen diese Produkte hergestellt werden können. Um das Gewicht etablierter Baustoffe zu reduzieren und so die geforderten Eigenschaften zu erhalten, kann im Herstellungsprozess der Baustoffmaische dauerhaft Luftporen zugeführt werden. Eingesetzte Bindemittel werden so mit Eigenschaften oder Kombinationen von Eigenschaften ausgestattet, dass Produkte hergestellt werden können, die gegenwärtig im Markt nicht verfügbar sind. Etablierte Produkte können mit Hilfe eines stabilen Porengefüges stark verbessert oder mit neuen Eigenschaften ausgestattet werden. Neben der Nutzung in der industriellen Fertigung, ist es wünschenswert das Material auf der Baustelle herstellen und verbauen zu können. Die geschäumte Maische sollte dabei stabil und prozessfähig, in der gewünschten Dichte herstellbar und ohne Dichteverlust förderfähig und verarbeitbar sein.

Die DE 20 56 255 A1 offenbart ein Schäumungsmittel für Gips- und Zementmassen, in dem als Tenside Alpha-Olefinsulfonate und/oder bestimmte Alkali-, Ammonium- oder Ethanolaminsalze von Schwefelsäureestern von oxalkylierten Alkoholen verwendet werden. Weiterhin können zusätzliche Stabilisatoren, insbesondere Fettalkohole, und Glykole als Kälteschutzmittel zugesetzt werden. Diese Stabilisierung genügt teilweise für Baustoffmaischen, wenn sie keinem oder geringem Druck ausgesetzt werden, nur in geringer Aufbauhöhe ausgebracht werden oder geringe Temperaturschwankungen am Verbaupunkt zu erwarten sind. Das Porengefüge im Baustoffleim kann jedoch bei erhöhtem Druck, stärker dimensionierter Aufbauhöhe oder stark erhöhten Temperaturen am Verbaupunkt versagen.

Für die Herstellung von (Poren-)Leichtbaustoffen werden der Bindemittelleim oder die Baustoffmaische mit einem Schaum vermischt. Dabei bleiben die Luftporen des Schaums erhalten und das Volumen der Maische wird um das Volumen des Schaums erhöht. Da Schaum nur geringes Eigengewicht besitzt, wird so die Dichte/das Gewicht verringert. Es entsteht geschäumter Bindemittelleim oder geschäumte Baustoffmaische. Diese geschäumte Baustoffmaische bindet durch Trocknung/Aushärtung zu einem Leichtbaustoff oder Porenleichtbaustoff, der die Luftporen des Schaums enthält, ab.

Aus der US 2006/0278128 A1 ist es bekannt, bei der Herstellung geschäumter Gipskartonplatten Fließmittel wie z. B. Polycarboxylatether einzusetzen, um Poren einer bestimmten gewünschten (mittleren) Porengröße zu erhalten, indem kleine zu "mittelgroßen" Poren "verschmelzen". Die verschmolzenen Poren bleiben bis zum Versteifen des Gipsleims (ca. drei Minuten) erhalten, wodurch eine stabile geschäumte Gipskartonplatte erzeugt wird. Der hierfür benötigte Schaum ist stabiler als das reine geschäumte Tensid, aber immer noch instabil, da kleine Poren weiterhin zu "mittelgroßen" Luftporen verschmelzen müssen.

Das Erzeugen solcher "mittelgroßen" Poren ist auch Ziel und Gegenstand der US 2009/0169864 A1. Hier kommt eine Mischung zweier Tenside, von denen eines ethoxyliert ist, zum Einsatz, um ein Porengefüge zu erzeugen, das stabiler ist als das von nicht ethoxylierten Tensiden allein, aber nicht so stabil, dass die beim Aufschäumen entstehenden kleinen Poren erhalten bleiben.

### Aufgabe der Erfindung

Schaumbildner für Gips und Beton sind bislang nicht für alle Anwendungen zufriedenstellend, da die geschäumte Baustoffmaische spontan zusammenfallen kann oder beim Pumpen, Abgießen oder Transportieren die eingestellte Dichte nicht gehalten werden kann. Instabile Luftporen platzen, das Volumen verringert sich und die Dichte erhöht sich.

Stabilisatoren, die zugesetzt werden, um den Schaum zu stabilisieren und somit die Eigenschaften des Schaums und damit des luftporenhaltigen Baumaterials zu verbessern, versprechen zwar oftmals günstigere Eigenschaften, können dies aber bei näherer Untersuchung selten halten. Vor allem unter erschwerten Bedingungen (extreme Temperaturen, Temperaturschwankungen, für das Schäumungsmittel ungeeignete Temperaturen, starke mechanische Einwirkungen auf das Material, bevor es zum Verbaupunkt kommt oder am Verbaupunkt selbst) liefern die Stabilisatoren des Standes der Technik nicht die gewünschten Effekte.

Die Aufgabe der Erfindung besteht darin, die Nachteile des Standes der Technik bezüglich Schaumstabilität zu beseitigen und ein Schäumungsmittel zur Herstellung von luftporenhaltigem Baumaterial und daraus hergestellt ein luftporenhaltiges Bauprodukt, bzw. allgemein ein Poren aufweisendes Leichtbau-, Verfüll- und Dämmmaterial zur Verfügung zu stellen, wobei die noch nicht abgebundene, geschäumte Baustoffmaische unter Verarbeitungsbedingungen und im Trocknungsprozess stabil bleibt. Ferner ist es eine Aufgabe der Erfindung, ein Verfahren zur Verfügung zu stellen, das die Handhabung des Schäumungsmittels und somit die Herstellung von Baustoffmaische sowie luftporenhaltigen Baustoffen erleichtert.

Das Schäumungsmittel ist in diesem Sinne zugleich als Porenbildner für den abgebundenen Baustoff aufzufassen.

Weiterhin sollte die geschäumte Maische bei mechanischer Beanspruchung, also beim Pumpen, Absenken oder bei Aufbauhöhen über 10 cm im Wesentlichen volumenstabil bleiben, ohne dabei Inhomogenitäten zu entwickeln. Beim Fördern mittels geeigneter Pumpen (besonders: Schlauch- und Schneckenpumpen) soll der Baustoffschaum ohne wesentlichen Dichteverlust am Verbaupunkt ankommen, dort bis zum vollständigen Abbinden stabil bleiben und dabei keine Instabilitäten oder Inhomogenitäten entwickeln.

Zusätzlich sollte die geschäumte Maische im Trocknungs-, Abbinde oder Hydratationsprozess ihre Aufbauhöhe nicht verändern. Wird das Material in einer Höhe vom 40 cm aufgebracht, so sollte diese Höhe auch nach dem Abbinden noch vorhanden sein.

Das Verfahren zur Herstellung der Leichtgipse und Gipsschäume soll auf alle Reingipse, Baugipse, REA-Gipse (alpha und beta Halbhydrate) und Gipsmischungen anwendbar sein. Zusätzlich sind weitere pulverförmige mineralische Baustoffe, einschließlich kalk-, kalkstein-, zement-, Tonerdeschmelzzement und/oder kieselsäurehaltiger Baustoffe, auch im Gemisch mit Gips und gegebenenfalls weiterer Zuschläge, verarbeitbar, d.h. mit dem Verfahren schäumbar.

Das Verfahren zur Herstellung von Leichtbeton soll auf Portlandzement aller verfügbaren Varianten und Handelsklassen, einschließlich der bereits ab Werk mit Additiven und/ oder Zuschlagstoffen versehenen Varianten anwendbar sein. Als Zuschlagstoffe für reinen Portlandzement können sämtliche bekannten Additive und pulverförmige Zuschlagstoffe, insbesondere mineralische Baustoffe, einschließlich Gips, Kies, Kalk-, Kalkstein, Tonerdeschmelzzement, Silikate und/oder kieselsäurehaltiger Baustoffe verwendet werden.

### Zusammenfassung der Erfindung

Die Aufgabe wird durch ein Schäumungsmittel der eingangs genannten Art gelöst, das aus Folgendem besteht:
a) 0,1 bis 65,0 Gew.-%, vorzugsweise 4,0 bis 25,0 Gew.-%, besonders bevorzugt 12,0 bis 17,0 Gew.-%, ionischem, vorzugsweise anionischem, schaumbildenden Tensid;
b) 0,05 bis 9,0 Gew.-%, vorzugsweise 1,0 bis 7,0 Gew.-%, besonders bevorzugt 2,0 bis 6,0 Gew.-%, mindestens einer bei Raumtemperatur festen Verbindung ELF-HG, ausgewählt aus der Gruppe, bestehend aus ethoxylierten Fettalkoholen mit einer Alkoholkette im Kohlenstoffgrundgerüst mit mindestens 12 Kohlenstoffatomen, ethoxylierten natürlichen Harzen, ethoxylierten künstlichen Harzen und ethoxylierten Glykolen;
c) 0,1 bis 7,0 Gew.-%, besonders bevorzugt 2,0 bis 6,0 Gew.-% Fettalkohol mit einer Kettenlänge von C10 bis C18, vorzugsweise von C12 bis C16;
d) 0,1 bis 60,0 Gew.-%, vorzugsweise 10,0 bis 55,0 Gew.-%, besonders bevorzugt 15,0 bis 50,0 Gew.-% Lösemittel, ausgewählt aus der Gruppe vicinale Diole mit 1 bis 6 C-Atomen, Diethylenglykol, Triethylenglykol und Diethylenglykolethern;
e) 0 bis 20 Gew.-% organische Zusatzstoffe;
f) 0 bis 20 Gew.-% pH-Wert-Regulatoren;
g) 0 bis 99,75 Gew.-%, vorzugsweise 20,0 bis 85,0 Gew.-%, besonders bevorzugt 15,0 bis 75,0 Gew.-%, Wasser,
wobei die Mischung insgesamt 100 Gew.-% ergibt.

"Aus ... besteht" oder "bestehend aus..." ist im Sinne der vorliegenden Erfindung dabei abschließend zu verstehen, d.h. neben den genannten Verbindungen sind jeweils keine weiteren Stoffe enthalten, die zur Wirkung des Mittels beitragen.

Die Aufgabe wird ferner gelöst durch die Verwendung des vorstehend beschriebenen Schäumungsmittels zur Stabilisierung eines Schaums aus dem Schäumungsmittel zur Herstellung luftporenhaltiger Baumaterialien, insbesondere Verfüll-, Leichtbau- und Dämmmaterialien eingesetzt wird.

Die Erfindung stellt ein neues Schäumungsmittel zur Verfügung, das gegenüber den aus dem Stand der Technik bekannten Mitteln stark stabilisiert ist. Die Standzeiten mit dem Schäumungsmittel bzw. dem Porenbildner erhaltener geschäumter Bindemittelleime oder Baustoffmaischen sind auch bei niedrigen und höheren Temperaturen, unter Druck und bei mechanischer Beanspruchung ausgezeichnet. Die geschäumten Maischen sind als solche pumpfähig und ihr Volumen bleibt erhalten, so dass sie bei einer üblichen Behandlung auf dem Bau oder in der Formkörperherstellung zu luftporenhaltigen Verfüll,- Leichtbau- und Dämmmaterialien aushärten können. Dies gilt allgemein für hydraulisch aushärtende Baustoffe. Das neue Schäumungsmittel ist in Kombination mit verschiedensten Bindemitteln und Bindemittelmischungen, einschließlich Gips, Kalk, Zement, anwendbar.

Im Rahmen der Erfindung wurde gefunden, dass Schäume aus einem Schäumungsmittel für die Herstellung luftporenhaltiger Verfüll-, Leichtbau- und Dämmmaterialien - nämlich geschäumte Bindemittelleime und geschäumte Baustoffmaischen - überraschenderweise durch Zugabe mindestens einer beim Raumtemperatur festen ethoxylierten Verbindung, ausgewählt aus der Gruppe bestehend aus ethoxylierten langkettigen Fettalkoholen, ethoxylierten natürlichen Harzen, ethoxylierten künstlichen Harzen und ethoxylierten Glykolen in hervorragender Weise stabilisiert werden. Insbesondere Schäumungsmittel auf der Basis ionischer schäumender Tenside werden durch die erfindungsgemäßen Verbindungen aufs Beste stabilisiert.

Ethoxylierung ist die Anlagerung von Ethylenoxid (Oxiran) an Verbindungen. Als Ethoxylierungsgrad bezeichnet man die Menge an Ethylenoxid, die an eine Verbindung gebunden wird. Dabei kann ein Ethoxylierungsgrad von gering ethoxyliert (1-4 Mol Ethylenoxid pro Mol zu ethoxylierende Verbindung) bis hoch ethoxyliert (120+ Mol) vorliegen. Der Ethoxylierungsgrad beeinflusst die Wasserlöslichkeit des Stoffes. Stearylalkohol (C-18 Fettalkohol) z.B. ist nicht wasserlöslich. Durch die Ethoxylierung wird der Stearyalkohol einer wässrigen Lösung zugänglich gemacht, hier dem Schäumungsmittel, wobei seine Fähigkeit einen Porenbildner zu stützen erhalten bleibt. Eine optimale Wasserlöslichkeit geht dabei nicht immer mit dem höchsten Ethoxilierungsgrad einher.

"Wasserlöslich" im Sinne der vorliegenden Erfindung bedeutet dabei, dass die ethoxylierte Verbindung im unverschäumten Porenbildner rückstandsfrei gelöst ist, wobei aber material- und temperaturabhängig eine Eintrübung erfolgen kann. Eine eventuelle Eintrübung hat keinen negativen Effekt auf die Funktionsweise und den Wirkungsgrad des Porenbildners.

"Langkettig" im Sinne der vorliegenden Erfindung bedeutet, dass der ethoxylierte Fettalkohol im Kohlenstoffgerüst der Alkoholgrundkette mindestens 12 Kohlenstoffatome aufweist. Besonders geeignet für die vorliegende Erfindung sind dabei Fettalkohole mit Grundkettenlängen von 12 bis 22 Kohlenstoffatomen, vorzugsweise mit Grundkettenlängen von 14 bis 20 Kohlenstoffatomen und ganz besonders bevorzugt mit Grundkettenlängen von 14 bis 18 Kohlenstoffatomen.

Verbindungen ELF-HG sind als Grundstoffe für Reinigungsmittel oder Kosmetika bekannt und können in der Art des zu ethoxylierenden Polymers oder Fettalkohols und dessen Ethoxylierungsgrad sehr vielfältig modifiziert werden, um die Wirkung in Bezug auf die Anwendung zu optimieren. Solche Verbindungen ELF-HG bestehen aus einem lipophilen Teil, und einem hydrophilen Teil, hier Ethylenoxid. Durch den hydrophilen Teil werden vorher nicht wasserlösliche Substanzen nun wasserlöslich, ohne dabei gewisse Grundeigenschaften des Ausgangstoffes zu verlieren. So wird nun z.B. ein hydrophober langkettiger Fettalkohol hydrophil und kann dem Schäumungsmittel als Stabilisator zugegeben werden und dort seine Stützwirkung entfalten, ohne die lipophile Eigenschaft zu verlieren.

Wichtig ist dabei, dass die ethoxylierte Verbindung bei Raumtemperatur fest ist. Verbindungen, die bei Raumtemperatur flüssig sind, zeigen keine gewünschte Stabilisierung.

Vorzugsweise liegt der Ethoxylierungsgrad der mindestens einen Verbindung ELF-HG im Falle der langkettigen Fettalkohole bei 3 bis 150, bevorzugt 25 bis 90, besonders bevorzugt 50. Für Anwendungen bei niedrigen Temperaturen unterhalb von 30°C sind Ethoxylierungsgrade von 50 bis 80 und sehr bevorzugt 60, besonders bevorzugt, im Falle von hohen Temperaturen ist ein Ethoxylierungsgrad zwischen 10 und 30, vorzugsweise 15 und 25, besonders geeignet. Um einen breiten Temperaturbereich abzudecken, sind Ethoxylierungsgrade von 25 bis 60 besonders geeignet.

Im Falle der natürlichen oder künstlichen Harze beträgt der Ethoxylierungsgrad vorzugsweise 3 bis 120, bevorzugt 10 bis 80, besonders bevorzugt 30 bis 60. Bei den Polyethylenglykolen ist der Ethoxylierungsgrad vorzugsweise im Bereich von 3 bis 120, bevorzugt 5 bis 60, besonders bevorzugt 15 bis 50.

Die durch die erfindungsgemäße Verwendung stabilisierten Schäumungsmittel sind solche, wie sie alternativ zu porösen Füllstoffen schon seit langem bekannt sind, jedoch nur in Einzelfällen praktikabel eingesetzt werden konnten, nämlich Schäumungsmittel auf Basis ionischer schäumender Tenside in wässrigen organischen Lösungsmitteln, im Allgemeinen in Wasser-Alkohol-Mischungen, insbesondere Wasser-Glykol-Mischungen. Es ist wesentlich, dass als Tenside stark schaumbildende Tenside eingesetzt werden. Der damit erzeugte Schaum wird häufig mit Stützmitteln, beispielsweise Fettalkoholen, zusätzlich gefestigt, wobei ab einer Kettenlänge von 12 C-Atomen der Fettalkohol so hydrophob wird, dass die Beigabe in den Schaumbildner nur mit Unterstützung eines Lösemittels möglich ist. Dabei besteht trotz Lösemittel die Gefahr, dass die eingesetzten Fettalkohole sich absondern und als Stützmittel ihre Wirksamkeit verlieren. Grundsätzlich gilt: Je länger die C-Kette, desto stabiler der Schaum, wobei sich ab Kettenlänge C-14 eine Nutzung im Porenbildner ausschließt, da das Material hydrophob ist und sich nicht in das Schäumungsmittel integrieren lässt. ELF-HG sind hydrophil, und besitzen dabei eine ausreichende Kettenlänge an C-Atomen, um das Schäumungsmittel über das bisher bekannte Maß hinaus zu stützen.

Der Gehalt des ELF-HG in dem noch nicht mit einer Baustoffkomponente vereinigten Schäumungsmittel beträgt vorzugsweise wenigstens 0,05 Gew.- % bis vorzugsweise nicht über 9,0 Gew.-%, kann aber je nach ethoxiliertem ELF-HG auch darüber liegen. Schäumungsmittel können hoch dosiert werden, jedoch nimmt bei Überdosierung die Schaumstabilität ab und der Verbrauch des zur Schaumherstellung benötigten Schaummittels erhöht sich. Höhere Konzentrationen können oft keine verbesserte Stabilisierung mehr erzielen und sind wirtschaftlich nicht sinnvoll.

Kommerziell erhältliche ELF-HG liegen je nach Temperatur in fester oder wachsähnlicher Form vor, wobei der Begriff "fest", wie er in den Ansprüchen verwendet wird, die wachsähnliche Form mit umfasst. Die Gew.-% Angaben für die Beigabe zum Schäumungsmittel beziehen sich auf den ELF-HG-Gehalt der vom Hersteller für das Produkt angegeben ist (= Substanzgehalt bzw. Feststoffgehalt).

Das Verhältnis von ELF-HG zu Tensid liegt vorzugsweise zwischen 1:12 und 1:1, vorzugsweise zwischen 1:12 und 1:6 und besonders bevorzugt bei 1:3.

Bevorzugt wird der ELF-HG für die Verwendung zur Stabilisierung des Schäumungsmittelschaums in Kombination mit wenigstens einem Fettalkohol eingesetzt, der unten noch näher beschrieben werden. Dabei beträgt das Verhältnis Fettalkohol zu ELF-HG vorzugsweise von 5:1 bis 1:4. Besonders bevorzugt ist das Verhältnis 1:1. Als Fettalkohole sind dabei solche mit einer Kettenlänge von 12 bis 16 Kohlenstoffatomen besonders geeignet. Als ganz besonders gut hat es sich herausgestellt, eine Mischung aus C12 und C14-Fettalkoholen einzusetzen. Vorzugsweise liegt dabei das Gewichtsverhältnis von C12 zu C14 zwischen 4:1 und 1:1, ganz besonders bevorzugt bei 3:1.

In der vorliegenden Erfindung bedeutet "ein Verhältnis von 3:1", dass auf 3 Teile der einen Substanz ein Teil der anderen Substanz enthalten ist, von 100% also 75% auf die eine Substanz und 25% auf die andere Substanz entfallen. Entsprechendes gilt für andere Verhältnisangaben.

Ferner ist es besonders bevorzugt, wenn zusätzlich wenigstens ein Lösemittel, ausgewählt aus der Gruppe vicinale Diole mit 1 bis 6 C-Atomen, Diethylenglykol, Triethylengglykol und Diethylenglykolether, in der Verbindung enthalten ist, wobei das Verhältnis von ELF-HG zu Lösemittel von 1:2 bis 1:16 reichen kann und vorzugsweise 1:9 beträgt.

Das Verhältnis von Tensid zu Fettalkohol beträgt vorzugsweise von 1:1 bis 12:1, besonders bevorzugt 3:1. Das Verhältnis von Tensid zu Lösemittel beträgt vorzugsweise von 5:1 bis 1:12, besonders bevorzugt 1:3. Das Verhältnis von Fettalkohol zu Lösemittel schließlich beträgt vorzugsweise von 2:1 bis 1:16, besonders bevorzugt 1:9.

Das in diesem Zusammenhang zur Erfindung gehörige gattungsgemäße Schäumungsmittel besteht aus den genannten Grundbestandteilen, wobei die Verhältnisangaben der einzelnen Bestandteile sich sowohl auf einsatzfähiges, verdünntes Schäumungsmittel beziehen als auch auf Konzentrate, die vorab verdünnt werden müssen.

Der Gehalt an wässrig-organischem Lösemittel, d.h. Wasser-Lösemittel-Gemisch, ist so einzustellen, dass sich alle Bestandteile gut lösen. Die Verhältnisse und Gewichtsangaben sind Anhaltspunkte für den Fachmann. U.a. hängt die Lösekraft von der Temperatur ab, so dass auch die spätere Verarbeitungstemperatur für die Wahl der Gewichtsverhältnisse eine Rolle spielen kann; diese Zusammenhänge sind dem Fachmann bekannt und die Schäumungsmittel-Zusammensetzungen können wie üblich optimiert werden.

Die organischen Zusatzstoffe bzw. Additive sowie die Säuren und Basen zur pH-Wert-Einstellung (auch anorganische) (pH-Wert-Regulatoren), sind in einem Anteil von 0 bis nicht mehr als 20 Gew.-% vorhanden. Sie sind für manche Schäumungsmittel nicht erforderlich. Vorzugsweise ist daher ihr Gehalt so gering wie möglich, d.h. vorzugsweise 0 - 10 Gew.-%, weiter vorzugsweise 0 - 5 Gew.-%, weiter vorzugsweise 0 - 3 Gew.-% und besonders bevorzugt 0 - 2 Gew.-%.

Als Tenside sind grundsätzlich stark schäumende alkalistabile oder selbst alkalisch reagierende Tenside geeignet. Dabei kommt es in erster Linie auf eine hohe Schäumkraft an. Bevorzugt sind anionische Tenside und insbesondere Sulfonate, Alkylsulfonate, insbesondere Alkalialkylsulfonate, Alkylensulfate oder Alkylethersulfonate. Die Alkylketten oder Alkylenketten der Sulfonate und Sulfate sind vorzugsweise langkettig und weiter vorzugsweise unverzweigt. Kettenlängen größer oder gleich C8 und vorzugsweise zwischen C10 und C20 können als typisch angesehen werden.

Bevorzugte Tenside umfassen u. a. lineare Alkylatsulfonate, Alphaolefinsulfonate, Betaolefinsulfonate, Alkylethersulfate, ethoxylierte Alkylphenole. Derzeit bevorzugt sind Alphaolefinsulfonate, z.B. Natrium C14-16-Olefin-Sulfonat, und unter den Alkylsulfaten SDS und SLS.

Weitere verwendbare anionische Tenside sind Acylaminosäuren und deren Salze, unter anderem Acylglutamate, wie zum Beispiel Natriumacylglutamat, Di-TEA-palmitoylaspartat, Natriumcaprylic/Capric Glutamat oder Natriumcocoylglutamat, Acylpeptide, einschließlich hydrolysierter Proteine und Proteinfraktionen, Sarcosinate, Taurate, Acyllactylate, Alininate, Arginate, Valinate, Prolinate, Glycinate, Aspartate, Propionate, Lactylate, Amidcarboxylate, Ferner kommen Phosphate/Phosphonate in Betracht. Weitere Beispiel sind Sulfosuccinate, Natriumcocomonoglyceridsulfat, Natriumlaurylsulfoacetat oder Magnesium PEG-n-Cocoamidsulfat, Alkylarylsulfonate und Acyl-isethionate, Ether- und Ester-Carbonsäuren, vorzugsweise der Fettsäuren, sowie weitere bekannte schäumende anionische Tenside, wie sie kommerziell erhältlich sind.

Es ist vorgesehen, dass das ionische schaumbildende Tensid wenigstens ein anionisches Tensid beinhaltet oder daraus besteht. Es kann ein einzelnes Tensid oder eine Mischung aus mehreren Tensiden eingesetzt werden. Solange die Schaumkraft erhalten bleibt, kann in einer Mischung neben wenigstens einem anionischen Tensid wenigstens ein anderes, insbesondere nichtionisches Tensid enthalten sein, was jedoch nicht bevorzugt ist.

Das Lösemittel aus der Gruppe der Glykole (vicinale 1,2-Diole, d.h. Alkohole mit OH-Gruppen an benachbarten Kohlenstoffatomen) ist bevorzugt ausgewählt aus der Gruppe, bestehend aus vicinalen Diolen mit 1 bis 6 C-Atomen, Diethylenglykol, Triethylenglykol und Diethylenglykolethern, wobei jeweils auch Mischungen zum Einsatz kommen können. Da es sich um Lösemittel handelt, liegen die verwendeten Glykole bei Raumtemperatur naturgemäß flüssig vor. Bevorzugte Verbindungen sind Ethylenglykol, Propylenglykol, Hexylenglykol, Butylenglykol, Butyldiglykol, Diethylenglykol, Dipropylenglykol, Diethylenglykolalkylether mit C1-C5-Alkyl, Dipropylenglykolalkylether mit C1-C5-Alkyl, oder Mischungen daraus. Das Lösemittel bringt alle Bestandteile des Schäumungsmittels gemeinsam in Lösung und bildet mit dem in dem Schäumungsmittel vorhandenen Wasser eine Mischphase. Tensid, ELF-HG und gegebenenfalls weitere Inhaltsstoffe liegen in einer wässrig-glykolischen Lösung vor. Das Lösemittel liegt in dem Schäumungsmittel mit 0,1 bis 60 Gew.-% vor, vorzugsweise mit ca. 10 - 55 Gew.- %, weiter vorzugsweise mit ca. 15 - 50 Gew.-%.

Weiterhin enthält das Mittel einen stützenden Fettalkohol, wie schon aus dem Stand der Technik nach DE 20 56 255 A1 und DE 38 07 250 A1 bekannt. Das dort genannte Dodecanol kann auch bei dieser Erfindung eingesetzt werden. Allgemein sind langkettige Fettalkohole mit einer Kettenlänge von C12 - C22 und vorzugsweise C14 bis C20 gut geeignet. Ganz besonders gut geeignet sind Fettalkohole mit einer Kettenlänge von C16 bis C18. Fettalkohole enthalten definitionsgemäß lineare oder wenig verzweigte gesättigte oder ein- oder mehrfach ungesättigte Kohlenwasserstoffketten. Kommerziell erhältliche Fettalkohole sind häufig natürlichen Ursprungs und bestehen häufig aus Gemischen, zu denen die durchschnittliche Kettenlänge angegeben wird. Die oben angegebenen Kettenlängen sind im Falle von Gemischen als Durchschnittslängen anzusehen. Der Fettalkohol bewirkt mit der Verbindung ELF-HG, dass der aus dem Tensid entstehende Schaum besonders gut stabilisiert wird, so dass das Schäumungsmittel auch für das Ermöglichen längerer Standzeiten geeignet ist.

Das Schäumungsmittel enthält immer, auch als Konzentrat, einen gewissen Wasseranteil. Der Verdünnungsgrad ist jedoch flexibel. So kann es beispielsweise gewünscht sein, das Mittel möglichst konzentriert vorliegen zu haben, um Transport- und Verpackungskosten für die Überführung zum Einsatzort zu verringern. Andererseits kann es für bestimmte Zwecke vorteilhaft sein, das für das Anmachen des Bindemittels erforderliche Wasser bereits in einer Zubereitung mit dem tensidhaltigen Schäumungsmittel nach dieser Erfindung vorliegen zu haben, z. B. um dem Anwender Abmessen und Vermischen zu ersparen und einen sofortigen Einsatz am Einsatzort zu ermöglichen. Der Wassergehalt des Mittels kann auch zur Einstellung des pH-Wertes genutzt werden. Es sind die verschiedensten Verdünnungsgrade für das tensidhaltige Mittel möglich. Der Wassergehalt sollte wenigstens 10 Gew.-% des Schäumungsmittels ausmachen.

Für bestimmte bevorzugte Ausführungsformen wird das Volumen des Grund-Schäumungsmittels oder -Konzentrats auf sein bis zu 30-faches Volumen weiter mit Wasser verdünnt, bevor es aufgeschäumt wird.

Der pH-Wert des Schäumungsmittels, das entweder als solches in Form der angegebenen Mischung eingesetzt und hierfür gegebenenfalls vorher aufgeschäumt wird oder dessen Einzelbestandteile der Gesamtmischung an geeigneter Stelle des zugehörigen Herstellungsverfahrens zugemischt werden, beträgt bevorzugt größer oder gleich pH 6, besonders bevorzugt ist der pH alkalisch, d.h. größer 7. Für viele Anwendungen kann der pH-Wert günstig auf Werte von 6 bis 13, bevorzugt von 7 bis 10 eingestellt werden. Hierfür kann dem Mittel falls erforderlich Lauge (vorzugsweise Alkalilauge, NaOH oder KOH) zugesetzt werden.

Das Schäumungsmittel kann auch weitere Zusatzstoffe enthalten, hierzu gehören Additive, einschließlich pH-Regulatoren und ergänzende Lösemittel, die jedoch nur in untergeordneter Menge beigefügt sein sollten.

Additive können sein: Verzögerer, Beschleuniger, Farbstoffe, Fließmittel, Wasserglas, Kieselsäure, Alkalisalze und andere bekannte Additive der Beton-, Kalk- und Gipsindustrie.

Ergänzende Lösemittel können beispielsweise C1-C20 Monoole oder Ester sein.

Beispielsweise können Butylacetat oder Acetylacetat, Methanol oder Ethanol als zusätzliches Lösungsmittel in geringerer Menge vorhanden sein.

Es ist jedoch bevorzugt, dass das Schäumungsmittel im Wesentlichen aus den beanspruchten und oben genannten Bestandteilen besteht.

Soweit erkennbar kommt es für die Herstellung des Schäumungsmittels nicht auf eine besondere Mischungsreihenfolge an.

Ein besonderer Aspekt der Erfindung besteht darin, dass das Schäumungsmittel - insbesondere sein Konzentrat bzw. eine wenig verdünnte Ausführungsform - gefriergetrocknet oder im Vakuum eingedampft und so in einen trockenen Zustand überführt werden kann. Das gefriergetrocknete oder in sonstiger Weise eingedampfte Schäumungsmittel kann besonders gut gelagert und transportiert werden. Es kann auch direkt dem Bindemittel zugemischt werden und so einen selbstschäumenden Bindemittelmix ergeben, bei dem sich im Mischer die Luftporen ohne weitere Zugabe von Schäumungsmitteln entwickeln. Das getrocknete Schäumungsmittel kann auch jederzeit in Wasser aufgelöst und wie das vorstehend ausführlich beschriebene flüssige Schäumungsmittel weiterverwendet werden. Durch die Trocknung erhält man ein Pulver, das in für Pulver geeigneten Behältern aufbewahrt, gelagert und transportiert werden kann.

Die Erfindung umfasst weiter verschiedene Verfahren zur Herstellung von luftporenhaltigen Verfüll-, Leichtbau- und Dämmmaterialien, die mit Hilfe des erfindungsgemäß mit ELF-HG optimal stabilisierten Schäumungsmittels erhalten werden können.

Bei einer ersten Verfahrensführung wird grundsätzlich aus einem Bindemittelleim aus den Bestandteilen Bindemittel, Anmachwasser und Schäumungsmittel durch die optionale Zugabe von Additiven oder Zuschlägen eine Baustoffmaische erzeugt, in die ein Schaum aus geschäumtem Porenbildner eingemischt wird und die auf diese Art und Weise zu luftporenhaltigem Baustoff weiterverarbeitet wird. Dem Bindemittelleim müssen nicht in jedem Fall Zuschläge zugegeben werden. Bindemittelleim ist in diesem Fall gleich Baustoffmaische, die nach erfolgtem Aufschäumen zum Aushärten und Trocknen gelangt.

Bei einer zweiten Verfahrensführung wird grundsätzlich das unverschäumte flüssige Schäumungsmittel dem Anmachwasser, dem Bindemittelmix oder auf andere Art und Weise dem Mischer zugeführt, in dem die Materialien zur Baustoffmaische vermischt werden. Hier kann das Schäumungsmittel auch in einer durch Gefriertrocknung erhaltenen pulverförmige, pastösen oder festen Form beigegeben werden. Das Schäumungsmittel schäumt dabei im Mischvorgang, in dem Anmachwasser, Feststoffe und Additive zur Maische vereinigt werden auf und erzeugt so eine geschäumte Baustoffmaische. Das Schäumungsmittel wird dabei nicht vorab aufgeschäumt.

In der ersten Verfahrensführung wird das Schäumungsmittel entweder in einem ersten Schritt mit Wasser verdünnt oder mit dem bereits im Schäumungsmittel enthaltenen Wasser zu einem Schaum aufgeschäumt. Dies geschieht beispielsweise in einem Schaumgenerator. Vorrichtungen hierfür sind dem Fachmann bekannt. Der so erhaltene Schaum kann dann dem Bindemittelleim oder der Baustoffmaische zugeführt werden, um dann wie unten näher beschrieben, nach Trocknung einen (Poren-) Leichtbaustoff zu ergeben.

**In** bevorzugten Ausführungsformen wird das optional vorab mit Wasser verdünnte Schäumungsmittel geschäumt und der so erhaltene Schaum entweder
1. mit dem Anmachwasser für Leim/ Maische,
2. mit dem Bindemittelleim aus Bindemittel und Anmachwasser sowie optional Additiven oder
3. mit der Baustoffmaische aus dem Bindemittelleim und Zuschlägen vereinigt

um die geschäumte Baustoffmaische zu ergeben. Der Schaum kann dabei indirekt wenigstens einem der Ausgangsstoffe oder direkt der Maische zugegeben werden. Dabei wird der Schaum direkt in den Mischer, in dem die Maische hergestellt wird, gegeben oder der Schaum wird in den Förderschlauch der Baustoffmaische zugegeben/ injiziert.

Gemäß einem weiteren Aspekt der vorliegenden Erfindung ist ein Verfahren zur Herstellung eines flüssigen luftporenhaltigen Baumaterials, insbesondere eines Verfüll-, Leichtbau- oder Dämmmaterials, aus einem geschäumtem Bindemittelleim oder aus einer geschäumten Baustoffmaische, bestehend aus Bindemittelleim sowie Zuschlägen und Additiven, wobei der Bindemittelleim aus Anmachwasser und Bindemittel besteht, besonders vorteilhaft, das die folgenden Schritte umfasst:
- Herstellen des Bindemittelleims durch Vermischen von Bindemittel und
   Anmachwasser
- sowie ggf. Herstellen der Baustoffmaische durch Vermischen des Bindemittelleims mit Zuschlägen und Additiven,
bei dem das erfindungsgemäße Schäumungsmittel, optional mit zusätzlichem Wasser, dem trockenen Bindemittel, dem Anmachwasser, dem Bindemittelleim oder der Baustoffmaische unaufgeschäumt zugesetzt wird und der Bindemittelleim oder die Baustoffmaische im Mischer durch den Mischvorgang geschäumt wird, um den geschäumten Bindemittelleim oder die geschäumte Baustoffmaische zu ergeben.

Dies ist uneingeschränkt für alle bekannten Bindemittelmischungen möglich, wobei jedoch der Wirkungsgrad des Schäumungsmittels und die erforderliche Mischzeit stark variieren. Dabei wird ein flüssiges oder ein gefriergetrocknetes Schäumungsmittel dem Feststoffmix, dem Anmachwasser oder direkt in dem Mischer zuzugeben, in dem der Materialmix wie üblich gemischt wird. Das Aufschäumen erfolgt in diesem Fall durch das intensive Mischen von Bindemittelmix und Anmachwasser im gewählten Mischer.

Alle Verfahrensvarianten, wie sie unten im Zusammenhang mit den Figuren am Beispiel Gips noch näher erläutert werden, sind grundsätzlich für den Einsatz mit unterschiedlichen Bindemitteln geeignet, wobei Varianten luftporenhaltiger Verfüll-, Leichtbau- und Dämmmaterialien, dazugehörige Produkte oder Flüssigestriche und ähnliche flüssig eingebrachte Baustoffe erzeugt werden.

Wie oben schon beschrieben, besteht das Bindemittel für das erfindungsgemäße Verfahren vorzugsweise aus Zement, Gips, Kalk, jeweils allein oder in beliebiger Mischung untereinander oder mit anderen mineralischen Bestandteilen.

Das erfindungsgemäße Verfahren umfasst die Möglichkeit die geschäumte Baustoffmaische direkt an den Verbaupunkt zu transportieren, vorzugsweise zu pumpen, und vor Ort aushärten zu lassen. Ist das Bindemittel in der geschäumten Baustoffmaische Portlandzement oder Tonerdeschmelzzement, kann dieses Material im Straßenbau eingesetzt werden und dort Kies- und Schotterschichten, Frostschutzschichten, hydraulisch gebundene (Trag-) Schichten, sowie Teile des Asphaltaufbaus ersetzen.

Die geschäumte Baustoffmaische kann auch in Hohlräume eingebracht werden und so mit anderen Baustoffen ein Verbundmaterialsystem ergeben. Dies ist besonders vorteilhaft für Fußboden- oder Fassadendämmungen, vor allem, wenn diese nachträglich ausgeführt werden sollen, also im Bereich der Bausanierung. Insbesondere ist das erfindungsgemäße Porenleichtbau- und Dämmmaterial gut geeignet, für Dämm- und Ausgleichsmaterialien in Boden, Dach und Wand), für Estriche und darunter liegende Bodenausgleichsmassen, für Decken- und Wandputze.

Die nach den verschiedenen Verfahrensvarianten der Erfindung erhaltene geschäumte Baustoffmaische ist unter Verarbeitungsbedingungen stabil, d.h. er lässt sich in fahrbaren Mischern transportieren, mit geeigneten Pumpen durch Schläuche und Rohrleitungssysteme pressen, für Formprodukte in Formen überführen oder als Dämm-Material in Zwischenräume oder auf Böden einbringen, ohne dass sich seine Dichte im Prozess erhöht oder verringert.

Das Verfahren umfasst jedoch auch die Möglichkeit, den Baustoffschaum in Form zu gießen und so Formkörper, insbesondere Bauelemente, zu erzeugen.

Bei der Fertigung von Gipskartonplatten kann das Schäumungsmittel durch verstärkte Bildung stabiler Luftporen das Gewicht des Endproduktes erheblich reduzieren. Dies kann auch im Verbund mit weiteren Zuschlagstoffen geschehen.

In einer besonders bevorzugten Ausführungsform geschieht das Ausformen und Aushärten unter Druck und erhöhter Temperatur in einem Autoklaven, bzw. in einer Form, die die Bedingungen eines Autoklaven bereitstellt. Dieses Verfahren ist unter anderem sehr vorteilhaft für die Herstellung mechanisch sehr stabiler Porenleichtgips-Formkörper und Produkten aus autoklaviertem Gasbeton (YTONG).

Ein solches Verfahren zur Herstellung eines luftporenhaltigen Bauprodukts, insbesondere eines Verfüll-, Bau- oder Dämmelements, umfasst die Schritte
- Mischen von Bindemittel, Anmachwasser, ggf. Zuschlägen und Additiven sowie einem erfindungsgemäßen Schäumungsmittel,
- Einfüllen der erhaltenen Mischung in eine Form und
- Erhalten des porenhaltigen Bauprodukts durch Aushärten der Mischung in der Form im Autoklaven unter mindestens einer der folgenden Bedingungen: erhöhter Druck, erhöhte relative Luftfeuchte und erhöhte Temperatur.

In einer weiteren bevorzugten Ausführungsform ist es möglich, mit einem der vorstehenden Formverfahren Blöcke herzustellen, aus denen durch eine Nachbearbeitung weitere Produkte entstehen. Insbesondere ist vorgesehen, dass mit dem erfindungsgemäßen Verfahren erhaltene geformte oder frei gegossene Blöcke aus Leichtbau- und Dämmmaterialien zu Produkten wie Leichtbauplatten, Innen- und Außenisolierelementen, insbesondere Fassadendämmungen und Paneelen, oder Formsteinen und Formelementen, geschnitten, gesägt oder gefräst werden.

Wird dieses Verfahren mit Material höherer Dichte durchgeführt, so dass die geforderten Festigkeiten einstellen, so können mit dem Verfahren Mauerwerkssteine oder Brandschutzplatten unterschiedlichster Klassen hergestellt werden.

### Bindemittel

Verfahren und Schäumungsmittel sind anwendbar bei allen Gipsarten, d. h. Dihydrat, Hemihydrat und Anhydrit in den verschiedenen Modifikationen, natürlichen oder synthetischen Ursprungs, einschließlich aller REA-Gipse, insbesondere alpha- und Betahalbhydraten.

Verfahren und Schäumungsmittel sind weiterhin anwendbar bei allen Zementarten und -sorten, d. h. Portlandzement und Tonerdeschmelzzement in den verschiedenen Modifikationen, natürlichen oder synthetischen Ursprungs.

Alle Bindemittel können die für die Verwendungszwecke üblichen Zuschläge enthalten, beispielsweise (gemahlenen) Kies, Sand, Kieselsäureprodukte, Abbindeverzögerer und -beschleuniger oder dergleichen. Es ist jedoch vorgesehen, dass der Bindemittelanteil bezogen auf die Trockenmasse vorzugsweise wenigstens 12,5 Gew.-%, beträgt. Es sind Anwendungen bei denen der Bindemittelanteil in der Trockenmasse 100 Gew.-% beträgt, so ist das Verfahren ebenfalls sehr gut bei reinem Gips oder reinem Zement anzuwenden.

Mittel und Verfahren nach der Erfindung führen zu stabilen Bindemittelschäumen auch mit geringer Rohdichte (< 500 kg/m³). Daraus hergestellte geschäumte Bauprodukte verfügen über hohe Wärmeisolierwerte.

Die Dichte der geschäumten Baustoffmaische und damit der Endprodukte kann in weiten Grenzen eingestellt werden. Hierdurch kann der geschäumte Baustoff nach der Erfindung in praktisch jeder gewünschten Dichte hergestellt werden. Es wurden luftporenhaltige Baustoffe mit Gewichten zwischen etwa 90 kg/m³ und 1.700 kg/m³ hergestellt und erprobt.

Die mit dem erfindungsgemäßen Mittel erhaltenen geschäumten Baustoffmaischen sind bei Temperaturen oberhalb 0° Celsius verarbeitbar und verfügen über hervorragende thermische Isoliereigenschaften und, trotz ihrer geringen Dichte, über sehr gute Schallisoliereigenschaften.

### Detaillierte Beschreibung der Erfindung

Im Folgenden wird die Erfindung anhand von Rezeptur- und Verfahrensbeispielen illustriert. Diese dienen der besseren Veranschaulichung der Erfindung und beschränken diese nicht in ihren allgemeinen Aspekten.

### Rezepturbeispiele - Schäumungsmittel:

### Beispiel Schäumungsmittel 1

6,0 Gew.% anionisches Tensid, Alkansulfonat
1,5 Gew.% Fettalkohol, C12-C14 Mix 70:30
   18,0 Gew.% Butyldiglykol (Diethylenglykolmonobutylether)
5,0 Gew.% ethoxylierter Fettalkohol C16-C18 (Ethoxylierungsgrad: EO 25)
   69,5 Gew.-% Wasser
100 % Gesamtlösung, Einsatzverdünnung 1:6

### Beispiel Schäumungsmittel 1 a (Konzentrat)

16,0 Gew.% anionisches Tensid, Alkansulfonat
   5,0 Gew.% Fettalkohol, C12-C14 Mix 70:30
46,0 Gew.% Butyldiglykol (Diethylenglykolmonobutylether)
   5,0 Gew.% ethoxylierter Fettalkohol C16-C18 (Ethoxylierungsgrad: 50)
28,0 Gew.-% Wasser
100 % Gesamtlösung, Einsatzverdünnung 1:12

### Beispiel Schäumungsmittel 2

10,0 Gew.% anionisches Tensid, Natrium C14-16-Olefinsulfonat
10,0 Gew.% Schwefelsäureestersalz
   3,0 Gew.% Fettalkohol, C10-C12 Mix 50:50
15,0 Gew.% Hexylenglykol
   3,0 Gew.% ethoxyliertes PEG (Polyethylenglykol) (Ethoxylierungsgrad: EO 23)
59,0 Gew.-% Wasser
100 % Gesamtlösung, Einsatzverdünnung 1:4

### Beispiel Schäumungsmittel 3

6,5 Gew.% anionisches Tensid, Natrium C14-16-Olefinsulfonat
1,5 Gew.% Fettalkohol, C12-C14 Mix 30:70
   15,0 Gew.% Butyldiglykol
5,0 Gew.% ethoxyliertes natürliches Harz (LUCRAMUL U-Flakes) (Ethoxylierungsgrad: EO 50)

72,0 Gew.-% Wasser
100 % Gesamtlösung, Einsatzverdünnung 1:4

Schäume aus diesen Schäumungsmitteln werden mit Bindemittelleim oder Baustoffmaische zu geschäumter Baustoffmaischen gemischt.

Wird in der Rezeptur eines Schäumungsmittels die ethoxylierte Verbindung ELF-HG weggelassen, verliert der Porenbildner seine Standfestigkeit.

Ein Baustoffleim wird in üblicher Weise hergestellt. Es können beispielsweise die in Beispielsmischung 1, 2 oder 2a genannten Zusammensetzungen gewählt werden. Die exakte Feststoffzusammensetzung und der Wassergehalt richten sich nach dem Verwendungszweck der geschäumten Maische. Entsprechend werden Art und Menge der gewählten Zuschläge und Zusammensetzung des Bindemittelmixes gewählt. Abhängig von der gewünschten Dichte des Endprodukts werden unterschiedliche Mengen an Schaum eingesetzt.

### Beispielmischung 1 Gipsleim:

1. die gewünschte Menge an Alpha Halbhydrat
2. davon 45 Gew.% Anmachwasser
3. 2,1 % Verzögerer (Weinsäure)

### Beispielmischung 2 Zementleim mit Fließmittel:

1. die gewünschte Menge an Portlandzement
2. davon 40 Gew.% Anmachwasser
3. 2,0 Gew.% der Bindemitteleinwaage Fließmittel Naphtalinsulfonat oder MELFLUX (BASF)

### Beispielmischung 2 a Zementleim ohne Fließmittel:

1. die gewünschte Menge an Portlandzement
2. davon 60 Gew.% Anmachwasser

### Beispiele Anwendungen:

**ANWENDUNG 1:** Herstellung einer Gipsplatte zur Innendämmung.

Gewünschte Feuchtdichte = 450 kg/m³, eingesetztes Bindemittel: Gips, Alpha-Halbhydrat inkl. Verzögerer, Zuschläge: keine.

Zur Herstellung eines Kubikmeters geschäumter Gipsmaische, die nach Aushärtung an der Raumluft im Trocknungsbehälter die gewünschte Dichte erreicht, werden 450 kg Gipsleim benötigt. Laut Beispiel 1 enthalten 450 kg Gipsleim 310 kg Gips und 140 Liter Wasser. Gips hat eine Dichte von 1,7. 310 kg Gips haben damit ein Volumen von 182,4 Litern. Zusammen mit dem Wasser ergibt sich ein Volumen von 322,4 Liter. Das zu einem Kubikmeter verbleibende Volumen von 677,6 Litern wird mit Schaum aus Beispiel Schäumungsmittel 1 aufgefüllt und mit dem Leim zu einem Kubikmeter geschäumter Gipsmaische vermischt.

**ANWENDUNG 1a:** Herstellung einer Leichtbetonplatte zur Außendämmung. Gewünschte Feuchtdichte = 600 kg/m³, eingesetzter Bindemittelleim gemäß Beispielmischung 2.

Zur Herstellung eines Kubikmeters geschäumter Maische, die nach Aushärtung an der Raumluft im Trocknungsbehälter die gewünschte Dichte erreicht, werden 600 kg Zementleim benötigt. Laut Beispielmischung 1 sind davon 430 kg Zement und 170 Liter Wasser. Zement hat eine Dichte von 3,1. 430 kg Zement haben damit ein Volumen von 139 Litern. Zusammen mit dem Wasser ergibt sich ein Volumen von 309 Liter. Das zu einem Kubikmeter verbleibende Volumen von 691 Litern wird mit Schaum aus Beispiel Schäumungsmittel 3 aufgefüllt und mit dem Leim zu einem Kubikmeter geschäumter Maische vermischt.

**ANWENDUNG 2:** Herstellung einer Ausgleichsmasse zum Flüssigeinbau auf der Baustelle unterhalb des Estrichs. Gewünschte Dichte = 400 kg/m³, gewünschte Festigkeit 1,5 N/mm², eingesetztes Bindemittel: Gips, natürliches Anhydrit, Zuschläge: 25 Gew.-%% Kies gemahlen mit geringer Körnung, Anreger Kaliumsulfat 2,0 Gew. % des Bindemittels.

Zur Herstellung einer geschäumten Gipsmaische, die am Verbaupunkt an der Raumluft aushärtet, werden 207 kg Anhydrit mit einer Dichte von 2,2 und einem Volumen von 94 l benötigt. Die Zuschläge besitzen eine Dichte von 2,7 und somit ein Volumen von 37 Litern, so dass 869 Liter Schaum für einen Kubikmeter Ausgleichsmasse benötigt werden. Es werden 2 Liter Schäumungsmittel laut Beispiel Schäumungsmittel 2 in das Anmachwasser gegeben und die Gesamtmischung in einem Intensivmischer zur geschäumten Maische gemischt.

**ANWENDUNG 3:** Herstellung einer Tragschicht im Wegebau, bei deren Einsatz auf sämtliche Schichten und Elemente unterhalb der abdeckenden Asphaltschicht verzichtet werden kann.

Gewünschte Dichte. 850 kg/m³, gewünschte Druckfestigkeit: 3,5 N/mm², eingesetztes Bindemittel: Portlandzement, CEM I 42,5 N.

Zur Herstellung einer geschäumten Betonmaische, die am Verbaupunkt aushärtet, werden gemäß Beispielmischung 2a 531 kg Zement mit einer Dichte von 3,1 und einem Volumen von 171 Litern benötigt. Zusammen mit dem Volumen des Anmachwassers von 510 l ergibt sich ein Volumen von 681 Litern, dass mit 319 Litern Schaum, der aus Beispiel Schäumungsmittel 1 hergestellt wurde vermischt wird und das gewünschte Material ergibt.

**ANWENDUNG 4:** Herstellung eines Leichtgipsputzes für den Innenbereich einer Außenwand. Gewünschte Dichte = 750 kg/m³, eingesetztes Bindemittel: Gips, Alpha-Halbhydrat, (Baumarktübliche) Sackware 25kg, Zuschläge: Verzögerer ab Werk, sonst keine.

Zur Herstellung eines Leichtgips aus geschäumter Gipsmaische, der nach Aushärtung an der Raumluft die gewünschte Dichte erreicht, werden 25 kg Gips (Sackware) mit 10 Litern Wasser zu Gipsleim vermischt. Gips hat eine Dichte von 1,7, woraus sich für 25 kg Gips ein Volumen von 15 Litern ergibt. Zusammen mit dem Wasser ergibt sich ein Volumen von 25 Litern.

Alternative 1: Der Leim wird mit 25 Litern Schaum gemäß Beispiel Schäumungsmittel 1 zu einer geschäumten Maische vermischt.

Alternative 2: Dem Feststoff oder dem Anmachwasser wird das Schäumungmittelkonzentrat in getrockneter oder pastöser Form zugegeben und die Mischung wird in einem Intensivmischer aufgeschäumt. Hierzu werden 1,0 g Pulver (hergestellt aus Beispiel Porenbildner 1) auf 25kg Gips gegeben.

### FIGURENBESCHREIBUNG

In der Zeichnung zeigen:
- Fig. 1: den schematischen Ablauf der Herstellung eines Leichtbaustoffs auf der Baustelle oder in der industriellen Fertigung;
- Fig. 2: den schematischen Ablauf der Herstellung von Leichtbaustoff in etwas geänderter Verfahrensführung;
- Fig. 3: den schematischen Ablauf der Herstellung von Leichtbaustoff unter Verwendung eines getrockneten Schäumungsmittels.

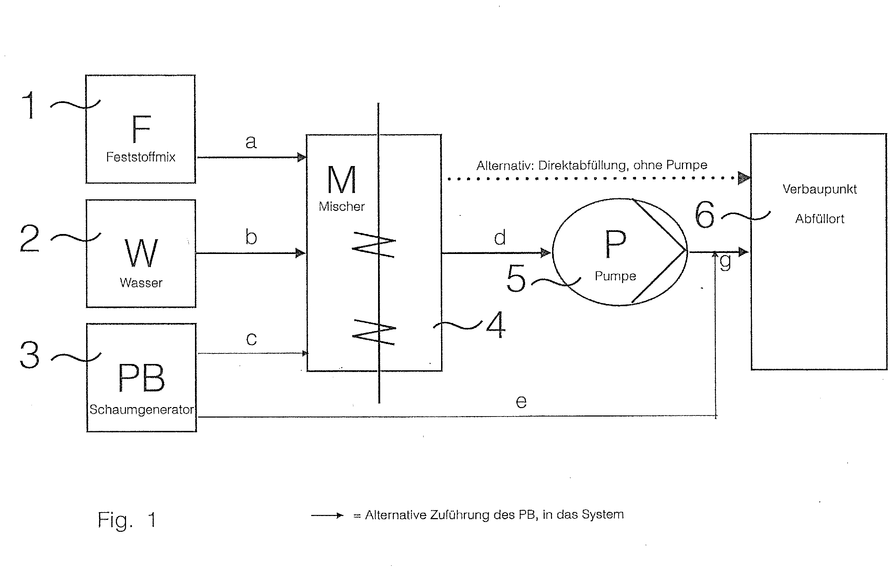

Figur 1 zeigt einen ersten Verfahrensablauf zur Herstellung einer geschäumten Baustoffmaische, aus der nach Trocknung (Poren-) Leichtbaustoffprodukte entstehen oder hergestellt werden. Die erforderlichen Ausgangsstoffe werden aus den Vorratsbehältern 1, 2 und 3 einem Standardmischer 4 zugeführt. Es können die verschiedensten Mischertypen verwendet werden. Jedoch sollte die Mischintensität variabel einstellbar sein, damit bei unverschäumter Zugabe des Schäumungsmittels in den Mischer die gewünschte Dichte (das gewünschte Porenvolumen) erreicht wird.

Das Bindemittel wird in dem Behälter 1 trocken vorgelegt. Es kann Zuschläge enthalten. Dieser Feststoffmix wird über eine Leitung a in den Mischer 4 gefördert. Alternativ können Bindemittel und Zuschläge in getrennten Vorrats- und Abgabebehältern vorgehalten werden, die über getrennte Leitungen mit dem Mischer verbunden wären (hier nicht gezeigt). Parallel hierzu wird das Anmachwasser aus Behälter 2 über eine Leitung b in den Mischer 4 gefördert.

Schaum wird in Schaumgenerator 3 vorgelegt und über eine Leitung c in den Mischer 4 gefördert. In Mischer 4 wird eine geschäumte Baustoffmaische erzeugt, die über eine Leitung d mit Hilfe einer Pumpe 5 zum Verbaupunkt auf einer Baustelle oder in eine Form zum Aushärten geleitet wird. Alternativ kann der Schaum unmittelbar über eine Leitung e in die Baustoffmaische geleitet werden. Hierfür wird der Schaum aus Leitung e in den Leimstrahl des unverschäumten Bindemittelleims oder der unverschäumten Baustoffmaische injiziert.

Die Überführungsleitungen d, d' und g können flexible Schläuche sein, mit denen die geschäumte Maische an einem Verbaupunkt eingebracht wird. Wobei Verwendungen der Maische als Dämmmaterial in Zwischenwände, als Putz, als Bodenausgleichsmasse oder als Estrich möglich sind.

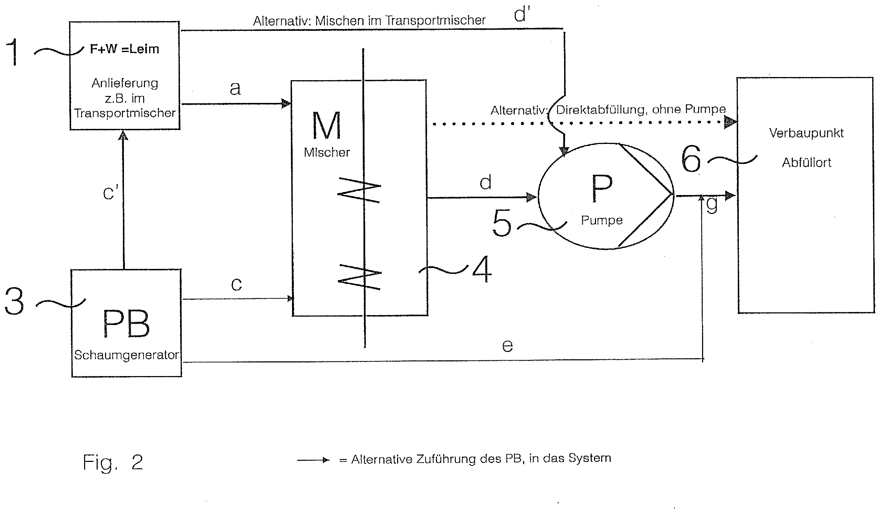

Figur 2 zeigt ein abgewandeltes Verfahren. Dabei wird in Behälter 1 ein zuvor, z.B. in einem Transportbetonwerk, erzeugter Bindemittelleim oder eine Baustoffmaische direkt aus dem Transportmischer zugegeben oder die Maische wird über Leitung d' der Pumpe 5 zugeführt. Alternativ kann der Schaum über Leitung c' dem Transportmischer beigeführt werden, wobei der Transportmischer die Funktion von Mischer 4 erfüllt und diesen ersetzt. Die beiden Komponenten Bindemittelleim und Schaum werden im Mischer 4 oder im Transportmischer gemischt und es bildet sich eine geschäumte Baustoffmaische, wie in dem Verfahren zu Figur 1. Aus dem Mischer 4 (über Weg d) oder aus dem Transportmischer (über Weg d') wird die geschäumte Baustoffmaische mittels der Pumpe 5 zum Verbaupunkt 6 oder in eine Form verbracht. Zuschläge können zuvor aus einem separaten Behälter unmittelbar in den Mischer 4 oder den Transportmischer gegeben worden sein.

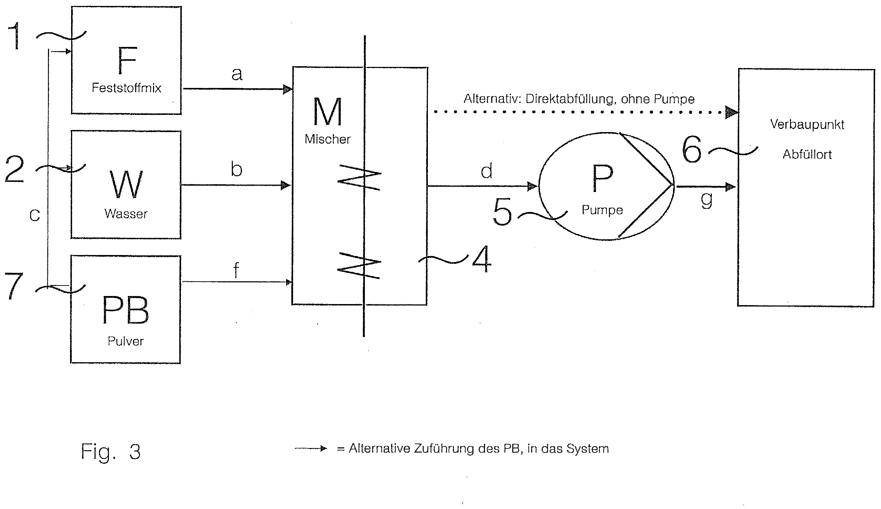

Figur 3 zeigt ein Beispiel für eine Verfahrensführung, bei der ein pulverförmiges, trockenes Schäumungsmittel eingesetzt wird. Wiederum ist ein Feststoffmix, d.h. Bindemittel und ggf. Zuschläge, in Behälter 1 vorgelegt. In Behälter 2 befindet sich Anmachwasser. Behälter 7 enthält nun das trockene, beispielsweise gefriergetrocknete Schäumungsmittel, das über Leitung c dem Bindemittel in Behälter 1 und/oder dem Anmachwasser in Behälter 2 zugegeben wird. Über den Materialstrom wird das pulverförmige Schäumungsmittel dem Mischer 4 zugeführt oder es wird direkt dem Mischer 4 zugegeben (hier schematisch Weg a,b,f). In dem Mischer 4 wird ein Bindemittelleimschaum oder eine geschäumte Baustoffmaische hergestellt, die wie zu den vorausgegangenen Figuren schon beschrieben über die Leitung d mittels Pumpe 5 zum Verbaupunkt 6 oder in eine Form transportiert wird.

### Gütetests

Geschäumte Baustoffmaischen müssen vorab definierten Ansprüchen genügen. Diese Ansprüche leiten sich vom gewünschten Bauprodukt ab. Die gewählte Zusammensetzung der Baustoffmaische ist oft ein Betriebsgeheimnis, und die Anzahl der Kombinationsmöglichkeiten und die unterschiedliche Konzentration einzelner Bestandteile erlaubt keinen allgemeingültigen Gütetest für geschäumte Baustoffmaischen. Es hat sich jedoch eine Reihe allgemeiner Tests etabliert, die die Qualität der mit dieser Erfindung beanspruchten verbesserten Stabilität des Schäumungsmittels der Baustoffmaische belegt. Natürlich ist ein stabiler Schaum noch keine Garantie für ein gutes Bauprodukt. Hier spielen die gewählte Bindemittelmischung, die beigegebenen Additive und das angewandte Herstellungs- und Trocknungsverfahren eine zu große Rolle für das Erreichen einer definierten Qualität. Allerdings ist ohne ein funktionierendes Schäumungsmittel kein luftporenhaltiges Bauprodukt möglich. Insbesondere für Anwendungen auf der Baustelle, bei der entscheidende Parameter ständig variieren, ist eine robuste und verlässliche Stabilität des eingesetzten Schaums notwendig. In einem industriellen Fertigungsprozess sind die Parameterabweichungen geringer. Material, Temperaturen, Abläufe sind intern standardisiert. Doch auch hier muss der Porenbildner dem Prozess standhalten und eine Robustheit bieten, dass bei Parameterabweichungen immer noch ein zufriedenstellendes Ergebnis erzielt wird.

Die im Folgenden beschriebenen Tests sind allgemeiner Natur und in den meisten Fällen anwendbar. Oft kann nur eine Kombination aus den beschriebenen Tests helfen die Eignung oder Nicht-Eignung eines Porenbildners zu belegen.

Für eine Gütetestreihe wird die gewünschte Baustoffmaische hergestellt. Im folgenden Beispiel haben wir folgende Mischungen getestet:
A - Ein Gipsleims aus Alpha-Halbhydrat, hier Südanit der CASEA GmbH und Leitungswasser.
B - Ein Zementleim aus Portlandzement, hier CEM I 42,5 R der Holcim Deutschland und Leitungswasser.

Beide Mischungen werden mit einem Schaum vermischt, der aus Schäumungsmittel gemäß Beispielsmischung 3 in einem 2-Pumpen-Schaumgenerator der Firma Finke aus Detmold aufgeschäumt wird.

Grundsätzlich ist die Beigabe des Schaums jederzeit vor dem Ansteifen des Baustoffleims möglich, sollte aber möglichst zeitnah zur Leimherstellung erfolgen. Der Leim muss in ungehärtetem Zustand verbleiben, um eine Vermischung mit dem Schaum zu ermöglichen.

Grundsätzlich kann die Geschäumte Baustoffmaische in unterschiedlicher Zusammensetzung und unterschiedlicher Dichte hergestellt werden.

### Test 1: Pumpstabilität

Der Leim oder die Maische kann mit allen derzeit im Markt verfügbaren Pumpenarten gefördert werden, für geschäumte Maischen sind Schlauch- und Schneckenpumpen geeignet. Die Vielzahl der verfügbaren Pumpprinzipien und die variablen Schaumbeigabepunkte erfordern einen praktischen Test, ob mit der gewählten Pumpe das gewünschte Ergebnis erreicht werden kann.

Es ist unerheblich, ob die Pumpen im Batch-Verfahren hergestelltes Material befördern oder die Materialherstellung kontinuierlich erfolgt.

Es ist unerheblich, ob der Leichtgips vorab hergestellt, in der Pumpe oder direkt hinter der Pumpe im Förderschlauch/-rohr oder im wartungsarmen oder wartungsfreien Verwirbler/Mischerelement hergestellt wird. Es ist aber zu beachten, dass Kolbenpumpen die Poren geschäumter Maischen zerstören können.

### Testablauf:

Es wird die Dichte der geschäumten Maische vor und nach dem Pumpen gemessen. Der Pumptest ist bestanden, wenn die nach dem Pumpen gemessene Dichte, der vor dem Pumpvorgang gemessenen Dichte oder der vorab definierten Zieldichte entspricht.

### Test 2: Stabilität beim Bewegen und Abgießen

Geschäumte Maischen auf der Basis jedweder Feststoffmixturen müssen vom Misch- zum Trocknungspunkt gelangen. Der Pumpprozess ist in Test 1 beschrieben. Hinzu kommt das das Material ggf. abgegossen, also am Verbaupunkt noch einmal bewegt werden muss. Diese Bewegung wird im Test simuliert.

### Testablauf:

Die geschäumte Maische wird in einen Behälter gefüllt und von diesem aus einer vorab definierten Höhe in einen zweiten Behälter gegossen, ggf. wird hier das Material noch verrührt oder anderweitig mechanisch bewegt, um den tatsächlichen Fertigungsablauf zu simulieren. Vor und nach dem Abgießen wird die Dichte gemessen. Wird ein erfindungsgemäßes Schäumungsmittel eingesetzt, bleibt die Dichte unverändert. Beim Abgießen erfindungsgemäßer geschäumter Baustoffmaischen sind Fallhöhen von über 3 m möglich.

### Test 3: Standstabilität

Die geschäumte Baustoffmaische verträgt je nach gewählter Zusammensetzung in einem Arbeitsgang aufgetragener Aufbauhöhen von über 150 cm. Dabei bleibt das Material volumenstabil mit homogen verteilten Luftporen.

### Testablauf:

Es wird geschäumte Maische in einen Behälter abgefüllt, in dem das Material trocknen kann. Nach dem Abfüllvorgang wird die obere Abfüllgrenze markiert. Nach erfolgter Trocknung muss sich die Oberkante des Baumaterials noch an der gekennzeichneten Stelle befinden. Ist Material während der Trocknung abgesackt, hat es an Volumen verloren. Poren haben sich aufgelöst, die enthaltene Luft ist entwichen, das Material sackt zusammen, die Dichte kann nicht gehalten werden. Der Schaum ist instabil.

### Bemerkungen zu den in Test 1-3 ermittelten Stabilitäten:

Jede gips- oder zementbasierte Maische kann aufgeschäumt werden, wenn der Mischung keine Additive beigemischt sind, die den Porenbildner neutralisieren oder anderweitig seiner Eigenschaft berauben (Entschäumer). Grundsätzlich ist jedoch eine Volumenstabilität nur zu erreichen, wenn sich eine hinreichende Menge geeigneter Bindemittel in der Baustoffmaische befindet. Der beste Porenbildner kann keine Mischung dauerhaft stabilisieren, die im Trocknungsprozess keine hinreichende Stabilität aus dem eingesetzten Bindemittelmix heraus entwickeln kann.

Ein Erfahrungswert ist, dass der Bindemittelgehalt in der Maische mindestens 12,5 % der gesamten Feststoffmasse betragen sollte.

### Test 4: Homogenität der Luftporenverteilung

Im getrockneten Baumaterial kann es notwendig sein zu ermitteln, ob die Luftporen im Trocknungsprozess ihre Größe und Verteilung im Raum beibehalten oder ob sich Inhomogenitäten gebildet haben. Hierzu wird aus einem hinreichend dimensionierten Körper aus verschiedenen Lagen eine vorab definierte Anzahl identisch dimensionierter Probekörper herausgeschnitten. An diesen Körpern wird unter dem Mikroskop oder mittels CRT die durchschnittliche Größe der Luftporen ermittelt. Danach werden die Probekörper gewogen. Identische Dichten bedeuten homogene Verteilung der Poren im System. Inhomogenitäten bilden sich, wenn Poren sich aus dem Gefüge der geschäumten Baustoffmaische lösen und sich Linsen mit höherem Anteil an Porenbildner und Linsen mit höherem Anteil an Maische bilden. Dabei setzt sich die Maische zumeist am Boden ab und die Poren wandern nach oben. Je nach Anwendung kann diese Entwicklung ein Ausschlusskriterium sein, dass die geschäumte Baustoffmaische für den Einsatzzweck ungeeignet werden lässt. Test 4 bietet hierzu ein einfaches Mittel auch ohne CRT Inhomogenitäten nachzuweisen.

### Allgemeines zu Vergleichstests:

Die Tests können einzeln oder in ihrer Gesamtheit wie vorgeschlagen durchgeführt und natürlich auch noch weiter ergänzt werden. Wird ein Testablauf definiert und zum Vergleich im Testablauf alternative Schäume eingesetzt, so zeigt sich, dass Schäume aus erfindungsgemäß hergestellten Schäumungsmitteln alternativen Schäumen überlegen sind, indem bei einzelnen oder sämtlichen Tests vorab definierte Zielwerte besser erreicht.

### Vergleich von Schäumungsmitteln:

Für den Vergleich eines erfindungsgemäßen mit einem alternativen Schäumungsmittel wird ein Schäumungsmittel S gemäß Beispielsrezeptur 3 mit einem Schäumungsmittel S- vergleichen, wobei S- ebenfalls Beispielrezeptur 3 entspricht, jedoch ist dem S- kein ELF-HG beigegeben. Die in diesem Vergleich verwendete Maische entspricht der in Referenzmischung I beschriebenen. Die Mischung gemäß Tabelle 1A wird durch Untermischen von vorgeschäumtem Porenbildner auf die gewünschte Dichte Tabelle 1B gebracht. Die so erhaltene geschäumte Baustoffmaische wird Tests 1 bis 3 unterzogen. Als Mischer wurde ein Standardmischer der Marke Eirich gewählt. Der Schaum wurde mit einem Schaumgenerator der Firma Finke hergestellt. Der Schaum wurde im Standardmischer nach erfolgter Herstellung der Maische untergemischt. Als Pumpe wurde eine Schlauchpumpe gewählt. Der Abfüllbehälter ist ein Holzbehälter aus Eigenherstellung.

Tabelle A zeigt das Testergebnis.

**Tabelle A**

| **Bezeich nung** | **Herstell dichte (kg/ m3)** | **Herstell volume n (l)** | **Dichte nach Pumptest (kg/ m3)** | **Aufbauhöhe (cm) Beginn Standtest** | **Aufbauhöhe (cm) Ende Standtest** |
|---|---|---|---|---|---|
| **S** | 800 | 500 | 800 | 80 | 80 |
| **S-** | 800 | 500 | 1.600 | 80 | 47 |

Es zeigt sich, dass das Schäumungsmittel S sowohl den Pumptest, als auch den Standtest ohne Abstriche besteht. Volumen und damit Dichte bleiben gleich. Beim Pumpen verringert sich die Dichte nicht. Beim Standtest ist nach dem Abbinden der Maische noch immer die Anfangsfüllhöhe vorhanden, d.h. das Material hat kein Volumen verloren.

Schäumungsmittel S- zeigt im Vergleich erhebliche Schwächen. Beim Pumptest geht ein Großteil des Volumens verloren. Beim Standtest reduziert sich die Aufbauhöhe um über 40% von 80 cm auf 47 cm. Es zeigt sich ein Versagen des Porenbildners S-. Für die Standtests wurde noch einmal Material mit Porenbildner S- hergestellt, da das Material aus dem Pumptest bereits versagt hatte. Da es möglich ist, dass ein Material beim Pumptest versagt aber den Standtest besteht, wurde mit einer zweiten Mischung der Standtest durchgeführt.

In diesem Vergleich von S und S- ist der Porenbildner durch den Einsatz von ELF-HG erfindungsgemäß optimal stabilisiert.

### Referenzmischungen

### I: Leichtbetonherstellung durch Zuführung eines Schaums zum vorab hergestellten Zementleim

Für die Mischungen gemäß nachfolgender Tabelle 1 gilt folgendes. Alle Mischungen am Beispiel Zement:
1- Mischung A (Referenzmischung), unverschäumt
2- Mischung B, Leichtbeton, Dichte 0,8 kg/ Liter oder 800 kg/m³
3- Mischung C, Leichtbeton, Dichte 0,4 kg/ Liter oder 400 kg/m³

**Tabelle 1**

| **Bezeichnung** | **Dichte (kg/ m3)** | **Gesamtvo lumen (I)** | **davon Schaum (l)** | **davon Zement (l)** | **davon Wasser (l)** |
|---|---|---|---|---|---|
| **A** | 1.800 | 1.000 | 0 | 400 | 600 |
| **B** | 800 | 1.000 | 560 | 180 | 260 |
| **c** | 400 | 1.000 | 775 | 90 | 135 |

Zur Herstellung eines Kubikmeters geschäumten Leichtbetons werden folgende Mengen benötigt:
Zement, hier CEM 1 42,5, benötigt, Spalte "davon Zement":
A: 1.200 kg Zement
B: 540 kg Zement
C: 270 kg Zement

Wasser, hier Leitungswasser, Spalte "davon Wasser":
A: 600 kg Wasser
B: 260 kg Wasser
C: 135 kg Wasser

Schaum, hier hergestellt aus Referenzmischung 1, Spalte "davon Schaum":
A- 0 Liter Schaum
B- 560 Liter Schaum
C- 775 Liter Schaum

Es können von 60% bis 110% der angegebenen Wassermengen verwendet werden, ohne dass das Leichtbetongefüge Schaden nimmt. Geringere oder höhere Wasseranteile sind möglich, werden aber aufgrund möglicherweise auftretender negativer Effekte wie erhöhte Zähigkeit, zu schnelles oder unvollständiges Abbinden etc. nicht empfohlen.

Die Referenzmischungen können mit allen denkbaren Feststoffmischungen und Schaumdichten durchgeführt werden. Bei der Berechnung von Schaumvolumen und daraus abgeleiteten Mengen an Porenbildnern ist die unterschiedliche Dichte des Feststoffmix zu beachten.

### II. Leichtgipsherstellung durch Zuführung des unverschäumten Schäumungsmittels zum Mischwasser bei der Gipsleimherstellung

Zur Herstellung von 5,0 Litern Gipsleim wird ein Alphahalbhydrat der CASEA GmbH und Leitungswasser verwendet. Der Gipsleim wird in einem 7-Liter-Mixer angesetzt. Es wird ein unverdünnter Porenbildner gemäß Beispiel Schäumungsmittel 1 zum Mischwasser zugegeben. Die Poren entstehen im Leim-Mischprozess.

Für die Mischungen gemäß nachfolgender Tabelle 2 gilt folgendes. Alle Mischungen am Beispiel Gips:
1- Mischung X (Referenzmischung), unverschäumt
2- Mischung Y, Leichtgips, Dichte 0,7 kg/ Liter oder 700 kg/m³
3- Mischung Z, Leichtgips, Dichte 0,5 kg/ Liter oder 500 kg/m³

**Tabelle 2**

| **Bezeichnung** | **Dichte (kg/ m3)** | **Gesamtv olumen (l)** | **davon Schaum (l)** | **davon Gips (l)** | **davon Wasser (l)** |
|---|---|---|---|---|---|
| **X** | 1.600 | 5,0 | 0 | 5,5 | 2,75 |
| **Y** | 700 | 5,0 | 2,9 | 2,3 | 1,15 |
| **Z** | 500 | 5,0 | 3,5 | 1,8 | 0,63 |

Folgende Mengen werden benötigt:
Gips, hier Alphahalbhydrat der CASEA GmbH, Spalte "davon Gips":
   X: 1.200 kg Gips
   Y: 540 kg Gips
   Z: 270 kg Gips
Wasser, hier Leitungswasser, Spalte "davon Wasser":
   X: 2,75 kg Wasser
   Y: 1,15 kg Wasser
   Z: 0,63 kg Wasser
Schaum, hier hergestellt aus Referenzmischung 1, Spalte "davon Schaum":
   X- 0 Liter Schaum
   Y- 2,9 Liter Schaum
   Z- 3,5 Liter Schaum

An unverdünntem Schäumungsmittel gemäß Beispiel Schäumungsmittel 3 werden benötigt:
a. 0,00 Liter
b. 0,02 Liter
c. 0,03 Liter

## Patentansprüche

1. Schäumungsmittel für das Schäumen eines Bindemittelleims oder einer Baustoffmaische zur Herstellung luftporenhaltiger Baumaterialien, insbesondere Verfüll-, Leichtbau- und Dämmmaterialien, bestehend aus
a) 0,1 bis 65,0 Gew.-%, vorzugsweise 4,0 bis 25,0 Gew.-%, besonders bevorzugt 12,0 bis 17,0 Gew.-%, ionischem, vorzugsweise anionischem, schaumbildenden Tensid;
b) 0,05 bis 9,0 Gew.-%, vorzugsweise 1,0 bis 7,0 Gew.-%, besonders bevorzugt 2,0 bis 6,0 Gew.-%, mindestens einer bei Raumtemperatur festen Verbindung, ausgewählt aus der Gruppe, bestehend aus ethoxylierten Fettalkoholen mit einer Alkoholkette im Kohlenstoffgrundgerüst mit mindestens 12 Kohlenstoffatomen, ethoxylierten natürlichen Harzen, ethoxylierten künstlichen Harzen und ethoxylierten Glykolen;
c) 0,1 bis 7,0 Gew.-%, besonders bevorzugt 2,0 bis 6,0 Gew.- % Fettalkohol mit einer Kettenlänge von C10 bis C18, vorzugsweise von C12 bis C16;
d) 0,1 bis 60,0 Gew.-%, vorzugsweise 10,0 bis 55,0 Gew.-%, besonders bevorzugt 15,0 bis 50,0 Gew.-% Lösemittel, ausgewählt aus der Gruppe vicinale Diole mit 1 bis 6 C-Atomen, Diethylenglykol, Triethylenglykol und Diethylenglykolethern;
e) 0 bis 20 Gew.-% organische Zusatzstoffe;
f) 0 bis 20 Gew.-% pH-Wert-Regulatoren;
g) 0 bis 99,75 Gew.-%, vorzugsweise 20,0 bis 85,0 Gew.-%, besonders bevorzugt 15,0 bis 75,0 Gew.-%, Wasser,
wobei die Mischung insgesamt 100 Gew.-% ergibt.

2. Schäumungsmittel nach Anspruch 1, **dadurch gekennzeichnet, dass** die Komponenten a) bis d) in folgenden Verhältnissen zueinander enthalten sind:
- a) Tensid zu b) fester ethoxylierter Verbindung: 1:1 bis 12:1, vorzugsweise 3:1;
- d) Lösemittel zu b) fester ethoxylierter Verbindung: 2:1 bis 16:1, vorzugsweise 9:1;
- c) Fettalkohol zu b) fester ethoxylierter Verbindung: 1:4 bis 5:1, vorzugsweise 1:1;
- a) Tensid zu c) Fettalkohol: 1:1 bis 12:1, vorzugsweise 3:1;
- a) Tensid zu d) Lösemittel: 5:1 bis 1:12, vorzugsweise 1:3;
- c) Fettalkohol zu d) Lösemittel: 2:1 bis 1:16, vorzugsweise 1:9.

3. Schäumungsmittel nach Anspruch 1 oder 2, **dadurch gekennzeichnet, dass** es vor dem Aufschäumen mit Wasser auf sein bis zu 30-faches Volumen verdünnt wird.

4. Schäumungsmittel nach einem der Ansprüche 1 bis 3, **dadurch gekennzeichnet, dass** es in einer durch Gefriertrocknung oder Vakuumeindampfung des Schäumungsmittels erhältlichen pastösen oder pulverförmigen festen Form vorliegt.

5. Verwendung des Schäumungsmittels nach einem der Ansprüche 1 bis 4 zur Stabilisierung eines Schaums bei der Herstellung luftporenhaltiger Baumaterialien, insbesondere Verfüll-, Leichtbau- und Dämmmaterialien.

6. Verfahren zur Herstellung eines flüssigen luftporenhaltigen Baumaterials, insbesondere eines Verfüll-, Leichtbau- oder Dämmmaterials, aus einem geschäumtem Bindemittelleim oder aus einer geschäumten Baustoffmaische, bestehend aus Bindemittelleim sowie Zuschlägen und Additiven, wobei der Bindemittelleim aus Anmachwasser und Bindemittel besteht, umfassend die Schritte
- Herstellen des Bindemittelleims durch Vermischen von Bindemittel und Anmachwasser
- sowie ggf. Herstellen der Baustoffmaische durch Vermischen des Bindemittelleims mit Zuschlägen und Additiven,
**dadurch gekennzeichnet, dass** das Schäumungsmittel nach einem der Ansprüche 1 bis 4, optional mit zusätzlichem Wasser, dem trockenen Bindemittel, dem Anmachwasser, dem Bindemittelleim oder der Baustoffmaische unaufgeschäumt zugesetzt wird und der Bindemittelleim oder die Baustoffmaische im Mischer durch den Mischvorgang geschäumt wird, um den geschäumten Bindemittelleim oder die geschäumte Baustoffmaische zu ergeben.

7. Verfahren nach Anspruch 6, weiterhin umfassend den Schritt des Aushärtens der Baustoffmaische, um das feste luftporenhaltige Bauprodukt zu erhalten.

8. Verfahren nach Anspruch 6, **dadurch gekennzeichnet, dass** die geschäumte Baustoffmaische in eine Form gefüllt und ausgehärtet wird, wobei das Aushärten in einer Form im Autoklaven unter mindestens einer der folgenden Bedingungen: erhöhter Druck, erhöhte relative Luftfeuchte und erhöhte Temperatur erfolgt.

9. Verfahren nach Anspruch 7 oder 8, weiterhin umfassend den Schritt des Formens des festen luftporenhaltigen Bauprodukts, insbesondere durch Schneiden, Sägen oder Fräsen.

10. Flüssiges luftporenhaltiges Baumaterial, insbesondere Verfüll-, Bau- oder Dämmmaterial, erhältlich mit dem Verfahren nach Anspruch 6.

## Claims

1. Foaming agent for foaming a binder glue or a binding material slurry for the production of air pore containing construction materials, in particular filling, lightweight and insulating materials, which agent consists of the following:
a) 0.1 to 65.0 wt.%, preferably 4.0 to 25.0 wt.%, particularly preferably 12.0 to 17.0 wt%, ionic, preferably anionic, foam-forming surfactant;
b) 0.05 to 9.0 wt.%, preferably 1.0 to 7.0 wt.%, particularly preferably 2.0 to 6.0 wt.%, of at least one compound which is solid at room temperature, selected from the group consisting of ethoxylated fatty alcohols having an alcohol chain in the carbon base structure with at least 12 carbon atoms, ethoxylated natural resins, ethoxylated artificial resins and ethoxylated glycols;
c) 0.1 to 7.0 wt.%, particularly preferably 2.0 to 6.0 wt.% fatty alcohol having a chain length of C10 to C18, preferably of C12 to C16;
d) 0.1 to 60.0 wt.%, preferably from 10.0 to 55.0 wt.%, particularly preferably from 15 to 50.0 wt.% of solvent selected from the group of vicinal diols having from 1 to 6 carbon atoms, diethylene glycol, triethylene glycol and diethylene glycol ethers;
e) 0 to 20 wt.% of organic additives;
f) 0 to 20 wt.% of pH regulators;
g) 0 to 99.75 wt.%, preferably 20.0 to 85.0 wt.%, particularly preferably 15.0 to 75.0 wt.%, of water,
wherein the mixture yields a total of 100 wt.%.

2. Foaming agent according to claim 1, **characterized in that** components a) to d) are present in the following ratios:
- a) surfactant to b) solid ethoxylated compound: 1:1 to 12:1, preferably 3:1;
- d) solvent to b) solid ethoxylated compound: 2:1 to 16:1, preferably 9:1;
- c) fatty alcohol to b) solid ethoxylated compound: 1:4 to 5:1, preferably 1:1;
- a) surfactant to c) fatty alcohol: 1:1 to 12:1, preferably 3:1;
- a) surfactant to d) solvent: 5:1 to 1:12, preferably 1:3;
- c) fatty alcohol to d) solvent: 2:1 to 1:16, preferably 1:9.

3. Foaming agent according to claim 1 or 2, **characterized in that** it is diluted to up to 30 times of its volume with water before foaming.

4. Foaming agent according to one of claims 1 to 3, **characterized in that** it is in pasty or powdery solid state obtainable by freeze-drying or evaporation in vacuo.

5. Use of the foaming agent according to one of the claims 1 to 4 for stabilizing a foam used in the production of air pore containing construction materials, in particular filling, lightweight and insulating materials.

6. Method for producing a liquid air pore containing building material, in particular a filling, lightweight construction or insulating material, from a foamed binder glue or from a foamed binding material slurry consisting of binder glue and aggregates and additives, wherein the binder glue consists of mixing water and binder, comprising the following steps:
- preparing the binder glue by mixing binding agent and mixing water
- and where applicable preparing the binding material slurry by mixing the binder glue with aggregates and additives,
**characterized in that** the foaming agent according to one of claims 1 to 4, optionally with additional water, is added unfoamed to the dry binding agent, the mixing water, the binder glue or the binding material slurry, and that the binder glue or the binding material slurry is foamed in the mixer by the mixing process to yield the foamed binder glue or the foamed binding material slurry.

7. Method according to claim 6, further comprising the step of curing the binding material slurry to obtain the solid air pore containing building product.

8. Method according to claim 6, **characterized in that** the foamed binding material slurry is filled into a mold and cured, wherein the curing takes place in a mold in an autoclave under at least one of the following conditions: increased pressure, increased relative humidity and elevated temperature.

9. Method according to claim 7 or 8, further comprising the step of shaping the solid air pore containing building product, particularly by cutting, sawing or milling.

10. Liquid air pore containing building material, particularly filling, building or insulating material, obtainable by the method of claim 6.

## Revendications

1. Agent moussant pour le moussage d'une colle de liant ou d'une pâte de matériau de construction pour la préparation de matériaux de construction contenant des pores d'air, notamment de matériaux de remplissage, de construction légère et d'isolation, constitué par
a) 0,1 à 65,0 % en poids, de préférence 4,0 à 25,0 % en poids, de manière particulièrement préférée 12,0 à 17,0 % en poids, de tensioactif ionique, de préférence anionique, formant une mousse ;
b) 0,05 à 9,0 % en poids, de préférence 1,0 à 7,0 % en poids, de manière particulièrement préférée 2,0 à 6,0 % en poids, d'au moins un composé solide à température ambiante choisi dans le groupe constitué par les alcools gras éthoxylés ayant une chaîne alcoolique dans le squelette carboné d'au moins 12 atomes de carbone, les résines naturelles éthoxylées, les résines artificielles éthoxylées et les glycols éthoxylés ;
c) 0,1 à 7,0 % en poids, de manière particulièrement préférée 2,0 à 6,0 % en poids d'alcool gras ayant une longueur de chaîne de C10 à C18, de préférence de C12 à C16 ;
d) 0,1 à 60,0 % en poids, de préférence 10,0 à 55,0 % en poids, de manière particulièrement préférée 15,0 à 50,0 % en poids de solvant, choisi dans le groupe des diols vicinaux ayant de 1 à 6 atomes de carbone, du diéthylèneglycol, du triéthylèneglycol et des éthers de diéthylèneglycol ;
e) 0 à 20 % en poids d'additifs organiques ;
f) 0 à 20 % en poids de régulateurs de pH ;
g) 0 à 99,75 % en poids, de préférence 20,0 à 85,0 % en poids, de manière particulièrement préférée 15,0 à 75,0 % en poids, d'eau,
le mélange donnant un total de 100 % en poids.

2. Agent moussant selon la revendication 1, **caractérisé en ce que** les composants a) à d) sont contenus dans les proportions suivantes les uns par rapport aux autres :
- a) tensioactif sur b) composé éthoxylé solide : 1:1 à 12:1, de préférence 3:1 ;
- d) solvant sur b) composé éthoxylé solide : 2:1 à 16:1, de préférence 9:1 ;
- c) alcool gras sur b) composé éthoxylé solide : 1:4 à 5:1, de préférence 1:1 ;
- a) tensioactif sur c) alcool gras : 1:1 à 12:1, de préférence 3:1 ;
- a) tensioactif sur d) solvant : 5:1 à 1:12, de préférence 1:3 ;
- c) alcool gras sur d) solvant : 2:1 à 1:16, de préférence 1:9.

3. Agent moussant selon la revendication 1 ou 2, **caractérisé en ce qu'**il est dilué avec de l'eau jusqu'à 30 fois son volume avant le moussage.

4. Agent moussant selon l'une quelconque des revendications 1 à 3, **caractérisé en ce qu'**il se présente sous une forme solide pâteuse ou pulvérulente pouvant être obtenue par lyophilisation ou évaporation sous vide de l'agent moussant.

5. Utilisation de l'agent moussant selon l'une quelconque des revendications 1 à 4 pour stabiliser une mousse lors de la préparation de matériaux de construction contenant des pores d'air, notamment de matériaux de remplissage, de construction légère et d'isolation.

6. Procédé de préparation d'un matériau de construction liquide contenant des pores d'air, notamment d'un matériau de remplissage, de construction légère ou d'isolation, à partir d'une colle de liant moussée ou d'une pâte de matériau de construction moussée, constituée de colle de liant ainsi que de granulats et d'additifs, la colle de liant étant constituée d'eau de gâchage et de liant, comprenant les étapes suivantes
- la préparation de la colle de liant par mélange de liant et d'eau de gâchage
- ainsi que, le cas échéant, la préparation de la pâte de matériau de construction par mélange de la colle de liant avec des agrégats et des additifs,
**caractérisé en ce que** l'agent moussant selon l'une quelconque des revendications 1 à 4, éventuellement avec de l'eau supplémentaire, est ajouté au liant sec, à l'eau de gâchage, à la colle de liant ou à la pâte de matériau de construction sans mousser et la colle de liant ou la pâte de matériau de construction est moussée dans le mélangeur par le processus de mélange pour donner la colle de liant moussée ou la pâte de matériau de construction moussée.

7. Procédé selon la revendication 6, comprenant en outre l'étape de durcissement de la pâte de matériau de construction pour obtenir le produit de construction solide contenant des pores d'air.

8. Procédé selon la revendication 6, **caractérisé en ce que** la pâte de matériau de construction moussée est versée dans un moule et durcie, le durcissement étant effectué dans un moule en autoclave dans au moins une des conditions suivantes : pression élevée, humidité relative de l'air élevée et température élevée.

9. Procédé selon la revendication 7 ou 8, comprenant en outre l'étape de mise en forme du produit de construction solide contenant des pores d'air, notamment par découpe, sciage ou fraisage.

10. Matériau de construction liquide contenant des pores d'air, notamment matériau de remplissage, de construction ou d'isolation, pouvant être obtenu par le procédé selon la revendication 6.
